# EUROPÄISCHE PATENTSCHRIFT

(11) **EP 2 317 201 B1**
(45) Veröffentlichungstag und Bekanntmachung des Hinweises auf die Patenterteilung: **18.07.2012**
(21) Anmeldenummer: 10012550.9
(22) Anmeldetag: 30.09.2010
(51) Int. Cl.: F16L 47/26, F16L 21/02, F16L 25/14

(54) **Reduzierstück**
Reducer
Raccord de réduction

(30) Priorität: 28.10.2009 DE 202009014575 U
(43) Veröffentlichungstag der Anmeldung: 04.05.2011
(73) Patentinhaber: Haas, Thomas, 90427 Herzogenaurach (DE)
(72) Erfinder: Haas, Thomas, 90427 Herzogenaurach (DE)
(74) Vertreter: FDST Patentanwälte

(56) Entgegenhaltungen:
- WO-A1-2008/040394
- DE-U1- 8 409 721
- NL-A- 8 801 130
- US-A- 3 913 928

## Beschreibung

Die Erfindung bezieht sich auf ein Reduzierstück nach dem Oberbegriff des Anspruchs 1. Ein solches Reduzierstück ist beispielsweise aus US 3 913 928 A bekannt.

Ein weiteres Reduzierstück, das mit Ausnahme der rutschhemmenden Kontur und des diese tragenden Vorsprungs ebenfalls dem Oberbegriff des Anspruchs 1 entspricht, ist aus EP 1 668 285 B1 bekannt. Weitere Reduzierstücke und Dichtungen, die innenseitig, sowie teils auch außenseitig mit rutschhemmenden Konturen versehen sind, sind ferner aus NL 8801130 A, WO 2008/040394 A1 und DE 84 09 721 U1 bekannt.

Ein Reduzierstück bildet einen fluiddichten Übergang zwischen einer ersten Rohrleitung mit vergleichsweise großem Durchmesser und einer zweiten Rohrleitung mit dem gegenüber kleineren Durchmesser. Solche Reduzierstücke werden insbesondere bei Gebäudeabwassersystemen verwendet.

Gebäudeabwasserleitungen werden üblicherweise an sich drucklos betrieben. Dennoch kann es in einer solchen Leitung zu einem - insbesondere vorübergehenden - Druckaufbau kommen. Typischerweise tritt dies auf, wenn die Fallleitung oder eine gebäudeseitige Anschlussleitung ganz oder teilweise verstopft ist. In diesem Fall können in der Abwasserleitung regelmäßig Drucke bis zu etwa 2 bar auftreten.

Bei erhöhtem Fluiddruck wirkt auf das Reduzierstück eine Kraft, die das Reduzierstück aus seinem in die größere Rohrleitung eingesteckten Montagezustand heraustreibt. Hierdurch kann die zwischen dem äußeren Rohrabschnitt des Reduzierstücks und der größeren Rohrleitung gebildete Verbindung undicht werden. Im schlimmsten Fall kann das Reduzierstück sogar ganz aus der großen Rohrleitung herausgedrückt werden.

Der Erfindung liegt die Aufgabe zugrunde, dieses Problem zu lösen.

Diese Aufgabe wird erfindungsgemäß gelöst durch die Merkmale des Anspruchs 1. Vorteilhafte Weiterbildungen der Erfindung finden sich in den Unteransprüchen.

Erfindungsgemäß wird ein Reduzierstück angegeben, das einen äußeren Rohrabschnitt, einen darin angeordneten inneren Rohrabschnitt sowie einen Verbindungssteg umfasst. Der äußere Rohrabschnitt ist zum bündigen Einstecken in ein erstes Rohr mit einem vergleichsweise großen Durchmesser bestimmt und ausgebildet. Der innere Rohrabschnitt ist dagegen dazu ausgebildet und bestimmt, ein zweites Rohr mit vergleichsweise geringem Durchmesser bündig aufzunehmen. Der Verbindungssteg verbindet den äußeren Rohrabschnitt mit dem inneren Rohrabschnitt einstückig und überbrückt dabei den zwischen den Rohrabschnitten gebildeten Zwischenraum fluiddicht. Im Montagezustand, in dem das Reduzierstück mit seinem äußeren Rohrabschnitt in das (große) erste Rohr eingesteckt ist, und in dem ein Ende des (kleinen) zweiten Rohres in den inneren Rohrabschnitt des Reduzierstücks eingesteckt ist, ist bestimmungsgemäß durch das Reduzierstück eine fluiddichte Verbindung zwischen dem ersten Rohr und dem zweiten Rohr geschaffen.

Um zu verhindern, dass aufgrund eines Fluiddruckes oder anderer Umstände das Reduzierstück aus dem ersten Rohr herausgedrückt wird oder herausrutscht, ist hierbei erfindungsgemäß am Außenumfang des äußeren Rohrabschnitts mindestens ein mit einer rutschhemmenden Kontur versehener Vorsprung angeformt, der bestimmungsgemäß den Haftschluss zwischen dem äußeren Rohrabschnitt des Reduzierstücks und dem ersten Rohr verbessert. Der Begriff "angeformt" drückt hierbei aus, dass der oder jeder Vorsprung und die auf diesem aufgebrachte rutschhemmende Kontur ein einstückiger Bestandteil des äußeren Rohrabschnitts und insbesondere auch aus demselben Material wie dieser gebildet ist.

Es hat sich gezeigt, dass durch ein oder mehrere solcher konturierten Vorsprünge auf sehr einfache Weise der Halt des Reduzierstücks in einem herkömmlichen Abwasserrohr wesentlich verbessert werden kann. Zu dieser Wirkung trägt insbesondere bei, dass unter Wirkung eines Fluiddruckes der äußere Rohrabschnitt des Reduzierstücks geringfügig aufgeweitet wird, wodurch sich der oder jeder konturierte Vorsprung in das Material des umgebenden ersten Rohres "eingräbt".

Das Reduzierstück sitzt somit also umso fester in dem ersten Rohr, je größer der auf es wirkende Fluiddruck ist.

Erfindungsgemäß wird der oder jeder Vorsprung aber durch einen langgestreckten und insbesondere schmalen Steg gebildet, der zumindest im Wesentlichen in Axialrichtung des Reduzierstücks verläuft, und auf dessen Außenseite die rutschhemmende Kontur auf- oder eingebracht ist. Der Begriff "im Wesentlichen in Axialrichtung verlaufend" ist hierbei als grobkörnige Angabe zu verstehen. Die Längserstreckung des oder jeden Vorsprungs kann im Rahmen der Erfindung also auch in gewissem Umfang von der exakten Axialrichtung abweichen.

Die die rutschhemmende Kontur tragende Außenseite des oder jeden Stegs ist vorzugsweise entlang der Längserstreckung des Stegs geringfügig konvex gewölbt. Der oder jeder Steg ist also in geringfügigem Maße ballig ausgebildet. Hierdurch wird zum einen das Risiko, dass das Reduzierstück beim Einschieben in das erste Rohr verkantet, signifikant reduziert. Zum anderen wird durch die leicht ballige Ausführung des oder jeden Stegs sichergestellt, dass die darauf aufgebrachte rutschhemmende Kontur auch dann noch gut greift, wenn das Reduzierstück nicht exakt gerade in das erste Rohr eingesteckt wird.

In einer besonders vorteilhaften Ausführung der Erfindung ist die rutschhemmende Kontur sägezahnartig ausgebildet. Sie umfasst also mindestens einen Sägezahn pro Vorsprung. Vorzugsweise sind aber auf dem oder jedem Vorsprung mehrere, insbesondere ein Vielzahl von Sägezähnen vorgesehen, die zumindest im Wesentlichen in Axialrichtung aneinandergereiht sind. Die Steilfläche eines jeden Sägezahns ist hierbei vorzugsweise zumindest im Wesentlichen radial bezüglich der Achse des äußeren Rohrabschnitts ausgerichtet, während die Schrägfläche jedes Sägezahns vorzugsweise etwa einen 60°-Winkel zur Radialrichtung einnimmt. Der oder jeder Sägezahn ist zweckmäßigerweise derart angeordnet, dass seine Schrägfläche einem vorderen Ende des äußeren Rohrabschnitts zugewandt ist, während seine Steilfläche einem hinteren Ende des äußeren Rohrabschnitts zugewandt ist. Die Begriffe "vorne" und "hinten" orientieren sich hierbei an der Einsteckrichtung, in der das Reduzierstück bestimmungsgemäß in das erste Rohr eingesteckt wird. "Vorne" ist dabei dasjenige Ende des äußeren Rohrabschnitts, das beim Einschieben in das erste Rohr vorauseilt, "hinten" oder "rückwärtig" dasjenige Ende des äußeren Rohrabschnitts, das beim Einschieben in das erste Rohr nacheilt.

Die solchermaßen gestalteten Sägezähne wirken nach Art von Widerhaken, indem sie dem Einstecken des Reduzierstücks in das erste Rohr keinen signifikanten Widerstand entgegensetzen, aber gegen das Herausdrücken des Reduzierstückes aus dem ersten Rohr sperren. Diese Sperrwirkung wird wiederum durch einen von innen auf den äußeren Rohrabschnitt wirkenden Fluiddruck verstärkt.

In bevorzugter Ausbildung nimmt die - in Radialrichtung des Reduzierstücks - zu messende "Zahnhöhe" einer Reihe von Sägezähnen zu dem rückwärtigen Ende des äußeren Rohrabschnitts hin ab. Dies trägt insbesondere dem Umstand Rechnung, dass der äußere Rohrabschnitt im hinteren Bereich regelmäßig versteift ist. Insbesondere ist an dem rückwärtigen Ende des äußeren Rohrabschnitts vorzugsweise ein radial nach außen abstehender Kragen angeordnet, der die Einstecktiefe des äußeren Rohrabschnitts begrenzt.

Zweckmäßigerweise sind am äußeren Rohrabschnitt eine ringförmige Dichtung zur Abdichtung des zwischen dem äußeren Rohrabschnitt und der Innenwand des auf diesen aufgesteckten ersten Rohrs oder zumindest eine ringförmige Nut zur Aufnahme einer solchen Dichtung vorgesehen. In diesem Fall ist der oder jeder mit der rutschhemmenden Kontur versehene Vorsprung in Einsteckrichtung hinter der Dichtung bzw. der zugehörigen Ringnut angeordnet, und somit in einem Bereich, der in der bestimmungsgemäßen Einbausituation nicht von dem durch die Rohrverbindung strömenden Fluid umspült wird. Hierdurch wird eine etwaige schmierende Wirkung des Fluids, z.B. im Falle von fetthaltigem Abwasser, auf die Verbindung zwischen dem oder jedem Vorsprung und der Innenwand des ersten Rohres vermieden.

Bei dem Reduzierstück handelt es sich vorzugsweise um ein einstückiges Kunststoffspritzgussteil. Die mit der rutschhemmenden Kontur versehenen Vorsprünge sind in diesem Fall an den äußeren Rohrabschnitt angespritzt.

Nachfolgend wird ein Ausführungsbeispiel der Erfindung anhand einer Zeichnung näher erläutert. Darin zeigen:
- Fig. 1: in einer perspektivischen Darstellung ein Reduzierstück mit einem äußeren Rohrabschnitt, einem inneren Rohrabschnitt und einem die Rohrabschnitte verbindenden Verbindungssteg,
- Fig. 2: in Seitendarstellung das Reduzierstück gemäß Fig. 1,
- Fig. 3: in einem Querschnitt III-III gemäß Fig. 2 das dortige Reduzierstück,
- Fig. 4: in einem Längsschnitt IV-IV gemäß Fig. 2 das dortige Reduzierstück zusammen mit zwei zu verbindenden Rohren,
- Fig. 5: eine vergrößerte Detailansicht V des Reduzierstücks gemäß Fig. 2, und
- Fig. 6: eine vergrößerte Detailansicht VI des Reduzierstücks gemäß Fig. 2.

Einander entsprechende Teile sind in allen Figuren stets mit gleichen Bezugszeichen versehen.

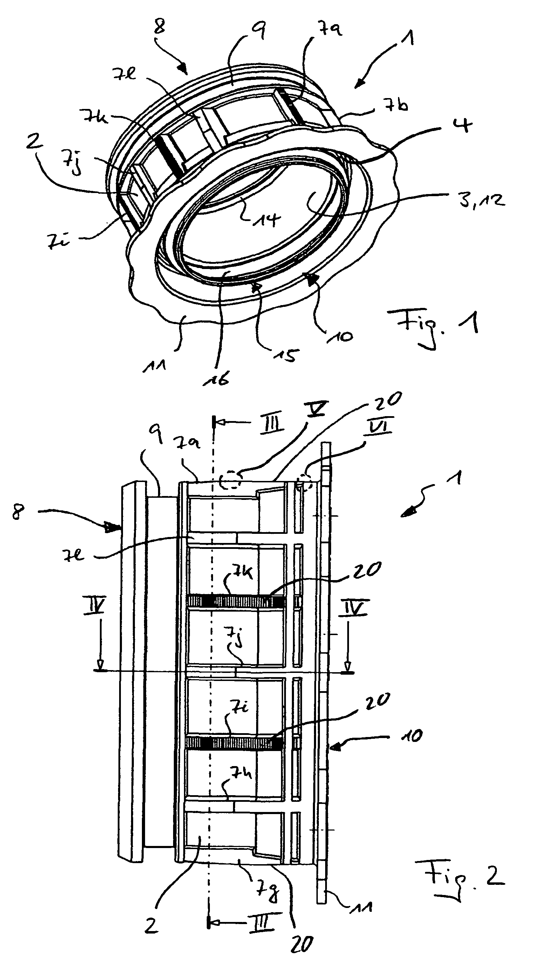

Bei dem in den Fig. 1 bis 6 dargestellten Reduzierstück 1 handelt es sich um ein einstückiges Kunststoffspritzgussteil, das im Wesentlichen durch einen äußeren Rohrabschnitt 2, einen inneren Rohrabschnitt 3 und einen diese Rohrabschnitte 2 und 3 verbindenden Verbindungssteg 4 gebildet ist. Das Reduzierstück dient insbesondere zur Verbindung von Abwasserrohren im Gebäudeinnenbereich.

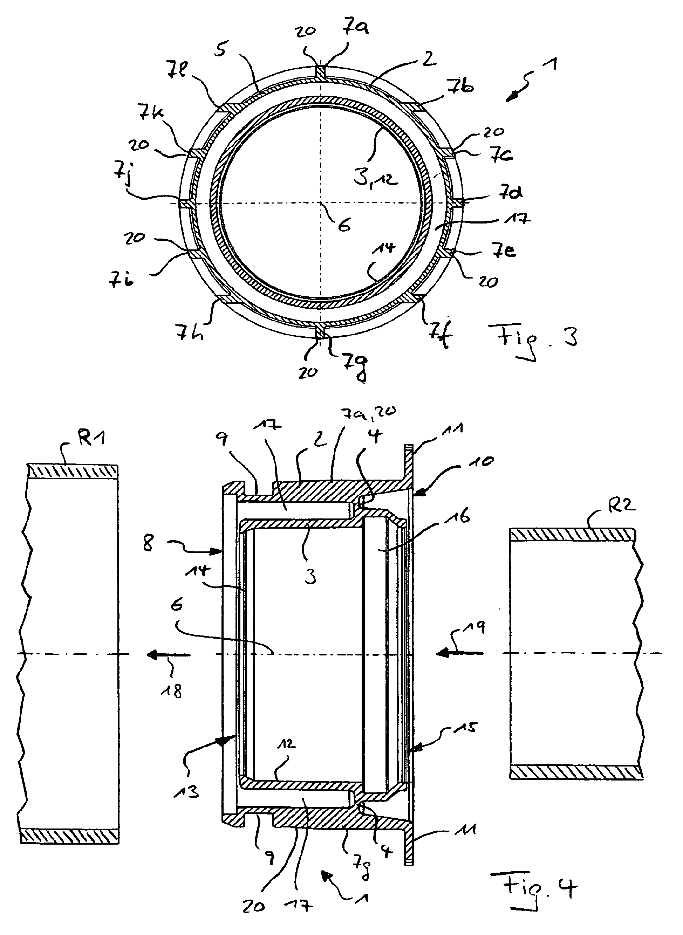

Der äußere Rohrabschnitt 2 hat eine im Wesentlichen zylinderförmige Wand 5 Fig. 3), von der zwölf Vorsprünge nach außen abstehen. Diese Vorsprünge haben die Form von schmalen, parallel zu einer Achse 6 (Fig. 3) des äußeren Rohrabschnitts 2 verlaufenden Stegen und sind nachfolgend als Axialstege 7a bis 7l bezeichnet.

An einem vorderen Ende 8, mit dem voran der äußere Rohrabschnitt 2 bestimmungsgemäß in ein erstes Rohr R1 (Fig. 4) mit vergleichsweise großem Durchmesser eingeschoben wird, ist in den äußeren Rohrabschnitt 2 eine Ringnut 9 eingebracht, die zur Aufnahme einer (nicht dargestellten) ringförmigen Dichtung dient. An einem zu dem Ende 8 axial entgegengesetzen hinteren Ende 10 ist an den äußeren Rohrabschnitt 2 ein radial nach außen abstehender Kragen 11 angespritzt, der als Anschlag für das erste Rohr R1 dient und somit die Einstecktiefe des äußeren Rohrabschnitts 2 in dem ersten Rohr R1 begrenzt.

Der innere Rohrabschnitt 3 wird ebenfalls im Wesentlichen durch eine näherungsweise zylindrische Wand 12 gebildet. An seinem dem Ende 8 zugewandten Ende 13 (Fig. 4) ist der innere Rohrabschnitt 3 mit einem radial nach innen ragenden Kragen 14 versehen, der als Anschlag für ein zweites Rohr R2 (Fig. 4) mit vergleichsweise geringem Durchmesser dient. An einem hierzu axial entgegengesetzten Ende 15 ist in den inneren Rohrabschnitt 3 eine Ringnut 16 eingebracht, die wiederum zur Aufnahme einer (nicht dargestellten) ringförmigen Dichtung dient.

Der Verbindungssteg 4 hat im Wesentlichen die Form einer radial zur Achse 6 ausgerichteten Scheibe, die außenseitig einstückig in den Rohrabschnitt 2, und innenseitig einstückig in den Rohrabschnitt 3 übergeht, und die somit eine fluiddichte, insbesondere wasserdichte Barriere in dem zwischen den Rohrabschnitten 2 und 3 gebildeten Zwischenraum 17 (Fig. 3) bildet.

Die bestimmungsgemäße Montage des Reduzierstücks 1 ist aus Fig. 4 ersichtlich. In dieser Figur sind insbesondere eine Einsteckrichtung 18, entlang der das Reduzierstück 1 mit dem äußeren Rohrabschnitt 2 in das erste Rohr R1 eingeschoben wird, sowie eine Einsteckrichtung 19, entlang der das zweite Rohr R2 in den inneren Rohrabschnitt 3 eingeschoben wird, durch Pfeile angedeutet. In dem bestimmungsgemäßen Montagezustand liegt das Reduzierstück 1 mit dem äußeren Rohrabschnitt 2 im Presssitz im Rohr R1 ein, wobei die Axialstege 7a bis 7l die Innenwand des Rohres R1 radial beaufschlagen. Das Rohr R2 liegt wiederum im Presssitz im inneren Rohrabschnitt 3 ein, wobei die Wand 12 die Außenseite des Rohres R2 radial beaufschlagt. Das Reduzierstück 1 wird vor der Montage mit Dichtungen bestückt, die in den korrespondierenden Ringnuten 9 und 16 einliegen. Im Montagezustand ist über das Reduzierstück 1 eine nach außen hin fluiddichte Verbindung zwischen dem Rohr R1 und dem Rohr R2 geschaffen.

Die Axialstege 7a bis 7l sind in Einsteckrichtung 18 der Ringnut 9 und der darin gegebenenfalls einliegenden Dichtung nachgeordnet, so dass die Axialstege 7a bis 7l im Montagezustand des Reduzierstücks 1 bestimmungsgemäß nicht von dem in den Rohren R1 und R2 strömenden Fluid umspült werden.

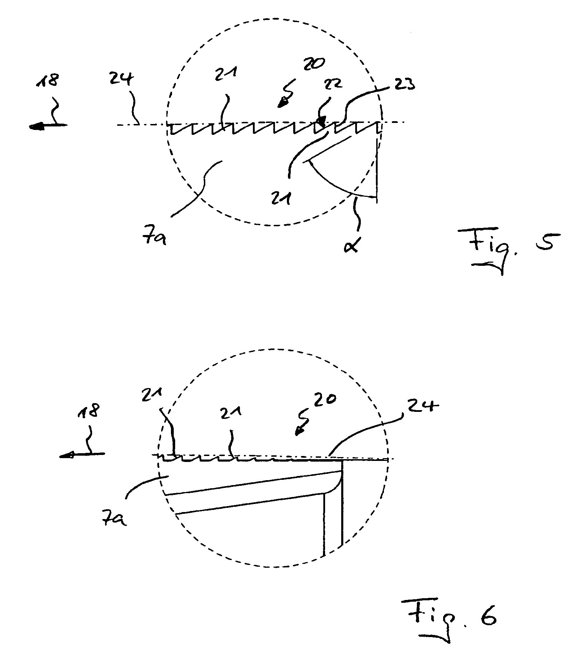

Um in dem Fall, dass das in den Rohren R1 und R2 strömende Fluid unter einem gegenüber Atmosphärendruck erhöhten Fluiddruck steht, zu verhindern, dass das Reduzierstück entgegen der Einsteckrichtung 18 aus dem Rohr R1 herausgedrückt wird, ist die Außenseite der Axialstege 7a,7c,7e,7g,7i und 7k mit einer rutschhemmenden Kontur 20 versehen, die in den Fig. 5 und 6 näher dargestellt ist. Wie diesen Figuren zu entnehmen ist, ist diese rutschhemmende Kontur 20 jeweils durch eine Vielzahl von axial aneinandergereihten Sägezähnen 21 gebildet, deren Schrägfläche 22 in Einsteckrichtung 18 nach vorne weist, während die Steilfläche 23 eines jeden Sägenzahns 21 in Einsteckrichtung 18 nach hinten weist. Die Sägezähne 21 sind also derart ausgerichtet, dass sie dem Einstecken des Reduzierstücks 1 in das Rohr R1 keinen nennenswerten Widerstand entgegensetzen, aber gegen das Herausdrücken des Reduzierstückes 1 aus dem Rohr R1 sperren. Die Sägezähne 21 sind dabei derart dimensioniert, dass ihre Steilfläche 23 etwa radial ausgerichtet ist, während die Schrägfläche 22 gegenüber der Radialen unter einem Winkel α von etwa 60° angestellt ist.

Um ein Verkanten des Reduzierstücks 1 beim Einstecken in das Rohr R1 nach Möglichkeit zu vermeiden, ist die Außenseite zumindest der konturierten Axialstege 7a,7c,7e,7g,7i und 7k leicht ballig ausgeführt, so dass die die Spitzen der Sägezähne 21 verbindende Hüllkurve 24 (Fig. 5) zumindest in einem vorderen Abschnitt leicht gekrümmt ist. Aus den Fig. 2 und 6 ist weiterhin zu erkennen, dass die Zahnhöhe der Sägezähne 21 zum Ende 10 hin bis auf Null abnimmt. Die Sägezähne 21 laufen also in der Umgebung des Kragens 11 kontinuierlich aus.

In dem dargestellten Ausführungsbeispiel sind die Rohrabschnitte 2 und 3 koaxial miteinander angeordnet. In alternativen Ausführungen des erfindungsgemäßen Reduzierstücks ist abweichend hiervon vorgesehen, den inneren Rohrabschnitt 3 exzentrisch zum äußeren Rohrabschnitt 2 zu positionieren.

Im dargestellten Ausführungsbeispiel ist alternierend jeder zweite Axialsteg 7a,7c,7e,7g,7i und 7k mit der rutschhemmenden Kontur 20 versehen, während die übrigen Axialstege 7b,7d,7f,77h,7j und 7l jeweils mit einer glatten Außenseite versehen sind. In einer alternativen Ausführungsform ist abweichend hiervon jeder Axialsteg 7a bis 7l außenseitig konturiert. In einer weiteren Ausführungsform sind lediglich die Axialstege 7c,7e,7i und 7k mit der rutschhemmenden Kontur 20 versehen, während die übrigen Axialstege 7a,7b,7d,7f,7g,7h,7j und 7l außenseitig glatt sind.

Zusätzlich kann optional auch die Innenwand des inneren Rohrabschnitts 3 ganz oder teilweise mit einer rutschhemmenden Kontur versehen sein, um ein Herausrutschen des zweiten Rohres R2 aus diesem Rohrabschnitt zu erschweren.

### Bezugszeichenliste

- 1: Reduzierstück
- 2: (äußerer) Rohrabschnitt
- 3: (innerer) Rohrabschnitt
- 4: Verbindungssteg
- 5: Wand
- 6: Achse
- 7a-7l: Axialsteg
- 8: Ende
- 9: Ringnut
- 10: Ende
- 11: Kragen
- 12: Wand
- 13: Ende
- 14: Kragen
- 15: Ende
- 16: Ringnut
- 17: Zwischenraum
- 18: Einsteckrichtung
- 19: Einsteckrichtung
- 20: Kontur
- 21: Sägezahn
- 22: Schrägfläche
- 23: Steilfläche
- 24: Hüllkurve
- α: Winkel
- R1: Rohr
- R2: Rohr

## Patentansprüche

1. Reduzierstück (1)
- mit einem äußeren Rohrabschnitt (2) zum Einstecken in ein erstes Rohr (R1),
- mit einem in dem äußeren Rohrabschnitt (2) angeordneten inneren Rohrabschnitt (3) zur Aufnahme eines zweiten Rohres (R2) mit einem im Vergleich zu dem ersten Rohr (R1) kleineren Durchmesser, sowie
- mit einem Verbindungssteg (4), der den äußeren Rohrabschnitt (2) mit dem inneren Rohrabschnitt (3) einstückig verbindet und dabei den zwischen den Rohrabschnitten (2,3) gebildeten Zwischenraum (17) fluiddicht überbrückt,
wobei am Außenumfang des äußeren Rohrabschnitts (2) mindestens ein mit einer rutschhemmenden Kontur (20) versehener Vorsprung (7a-7l) angeformt ist,
**dadurch gekennzeichnet,**
**dass** der oder jeder Vorsprung durch einen langgestreckten, zumindest im Wesentlichen in Axialrichtung verlaufenden Steg (7a-7l) gebildet ist, dessen Außenseite mit der rutschhemmenden Kontur (20) versehen ist.

2. Reduzierstück (1) nach Anspruch 1,
**dadurch gekennzeichnet,**
**dass** die Außenseite des oder jeden Stegs (7a-7l) entlang der Längserstreckung des Stegs (7a-7l) geringfügig konvex gewölbt ist.

3. Reduzierstück (1) nach Anspruch 1 oder 2,
**dadurch gekennzeichnet,**
**dass** die rutschhemmende Kontur (20) sägezahnartig ausgebildet ist.

4. Reduzierstück (1) nach Anspruch 3,
**dadurch gekennzeichnet,**
**dass** die rutschhemmende Kontur (20) mehrere im Wesentlichen in Axialrichtung aneinandergereihte Sägezähne (21) umfasst.

5. Reduzierstück (1) nach Anspruch 4,
**dadurch gekennzeichnet,**
**dass** die Zahnhöhe der aneinandergereihten Sägezähne (21) zu einem in Einsteckrichtung (18) des äußeren Rohrabschnitts (2) rückwärtigen Ende (10) dieses Rohrabschnitts (2) hin abnimmt.

6. Reduzierstück (1) nach einem der Ansprüche 1 bis 5,
**dadurch gekennzeichnet,**
**dass** an einem in Einsteckrichtung (18) des äußeren Rohrabschnitts (2) rückwärtigen Ende (10) dieses Rohrabschnitts (2) ein radial nach außen abstehender Kragen (11) angeordnet ist, der die Einstecktiefe des äußeren Rohrabschnitts (2) begrenzt.

7. Reduzierstück (1) nach einem der Ansprüche 1 bis 6,
**dadurch gekennzeichnet,**
**dass** am äußeren Rohrabschnitt (2) eine ringförmige Dichtung zur Abdichtung des zwischen dem äußeren Rohrabschnitt (2) und der Innenwand des auf diesen aufgesteckten ersten Rohrs (R1) oder zumindest eine ringförmige Nut (9) zur Aufnahme einer solchen Dichtung vorgesehen ist, wobei der oder jeder mit der rutschhemmenden Kontur (20) versehene Vorsprung (7a-71) in Einsteckrichtung (18) hinter der Dichtung bzw. der Ringnut (9) angeordnet sind.

8. Reduzierstück (1) nach einem der Anasprüche 1 bis 7,
das als einstückiges Kunststoffspritzgussteil gefertigt ist.

## Claims

1. Reducing piece (1)
- with an external pipe section (2) for insertion in a first pipe (R1),
- with an internal pipe section (3) arranged in the external pipe section (2) to accommodate a second pipe (R2) with a smaller diameter compared with the first pipe (R1) as well as
- with a connecting web (4) which provides a one-piece connection between the external pipe section (2) and the internal pipe section (3) and in so doing forms an impermeable seal for the space (17) formed between the pipe sections (2, 3),
wherein at least one projection (7a-71) provided with a non-slip contour (20) is moulded on the outer circumference of the external pipe section (2),
**characterised in that**
the one projection, or each projection, is formed by an elongated web (7a-71) substantially running at least in an axial direction, whose external side is provided with a non-slip contour (20).

2. Reducing piece (1) according to claim 1,
**characterised in that**
the outside of the web or webs (7a-71) is curved along the longitudinal side of the web (7a-71) in a slightly convex manner.

3. Reducing piece (1) according to claim 1 or 2,
**characterised in that**
the non-slip contour (20) is designed in the manner of a saw tooth.

4. Reducing piece (1) according to claim 3,
**characterised in that**
the non-slip contour (20) includes several saw teeth (21) aligned in a row one after the other in a substantially axial direction.

5. Reducing piece (1) according to claim 4,
**characterised in that**
the height of the teeth of the saw teeth (21) aligned in a row one after the other decrease to a rear end (10) of the pipe section (2) in the direction of insertion (18) of this external pipe section (2).

6. Reducing piece (1) according to one of the claims 1 to 5
**characterised in that**
a collar (11) protruding outwards radially is arranged on a rear end (10) of the pipe section (2) in the direction of insertion (18) of the external pipe section (2); this limits the insertion depth of the external pipe section (2).

7. Reducing piece (1) according to one of the claims 1 to 6
**characterised in that**
a ring-shaped seal for sealing the first pipe (R1) is provided on the external pipe section (2) between the external pipe section (2) and the inner wall of the first pipe (R1) attached to the former, or at least a ring-shaped groove (9) for accommodating such a seal is provided, whereby the projection (7a -71) or each projection (7a-71) provided with the non-slip contour (20) is/are arranged in the direction of insertion (18) behind the seal or ring grove (9).

8. Reducing piece (1) according to one of the claims 1 to 7,which is manufactured as a one-piece plastic injection moulded part.

## Revendications

1. Raccord réducteur (1) comprenant
- un tronçon tubulaire extérieur (2) à enfiler dans un premier tube (R1),
- un tronçon tubulaire intérieur (3) agencé dans le tronçon tubulaire extérieur (2) et destiné à recevoir un second tube (R2) avec un diamètre plus petit par comparaison au premier tube (R1), et
- une barrette de liaison (4), qui relie d'une seule pièce le tronçon tubulaire extérieur (2) avec le tronçon tubulaire intérieur (3) et comble ici de façon étanche aux fluides l'intervalle (17) formé entre les tronçons tubulaires (2, 3),
dans lequel au moins une saillie (7a-71) qui présente un contour (20) freinant le glissement est conformée à la périphérie extérieure du tronçon tubulaire extérieur (2),
**caractérisé en ce que**
la ou chaque saillie est formée par une barrette allongée (7a-71) s'étendant au moins sensiblement en direction axiale, dont la face extérieure est dotée du contour (20) freinant le glissement.

2. Raccord réducteur (1) selon la revendication 1,
**caractérisé en ce que** la face extérieure de la barrette ou de chaque barrette (7a-71) est légèrement bombée de manière convexe le long de l'extension longitudinale de la barrette (7a-71).

3. Raccord réducteur (1) selon la revendication 1 ou 2,
**caractérisé en ce que** le contour (20) freinant le glissement est réalisé à la manière de dents de scie.

4. Raccord réducteur (1) selon la revendication 3,
**caractérisé en ce que** le contour (20) freinant le glissement comprend plusieurs dents de scie (21) en rangée les unes contre les autres sensiblement en direction axiale.

5. Raccord réducteur (1) selon la revendication 4,
**caractérisé en ce que** la hauteur des dents de scie (21) en rangée les unes contre les autres diminue en direction d'une extrémité (10), postérieure dans la direction d'enfilage (18) du tronçon tubulaire extérieur (2), de ce tronçon tubulaire (2).

6. Raccord réducteur (1) selon l'une des revendications 1 à 5,
**caractérisé en ce que**, à une extrémité (10), postérieure dans la direction d'enfilage (18) du tronçon tubulaire extérieur (2), de ce tronçon tubulaire (2) est agencée une collerette (11) dépassant radialement vers l'extérieur, qui limite la profondeur d'enfilage du tronçon tubulaire extérieur (2).

7. Raccord réducteur (1) selon l'une des revendications 1 à 6,
**caractérisé en ce qu'**il est prévu sur le tronçon tubulaire extérieur (2) un joint annulaire pour étancher entre le tronçon tubulaire extérieur (2) et la paroi intérieure du premier tube (R1) enfilé sur celui-ci, ou au moins une gorge annulaire (9) destinée à recevoir un tel joint, dans lequel la ou chaque saillie (7a-71) dotée du contour (20) freinant le glissement est/sont agencée(s) en direction d'enfilage (18) derrière le joint ou la gorge annulaire (9).

8. Raccord réducteur (1) selon l'une des revendications 1 à 7,
**caractérisé en ce qu'**il est réalisé sous la forme d'une pièce en matière plastique injectée d'un seul tenant.
